Europäisches Patentamt

(19) European Patent Office

Office européen des brevets

(11) Publication number: **0 064 826**
**B1**

(12) **EUROPEAN PATENT SPECIFICATION**

(45) Date of publication of patent specification: **22.06.88**

(51) Int. Cl.⁴: **G 06 F 7/48**

(21) Application number: **82302080.5**

(22) Date of filing: **23.04.82**

(54) Arithmetic unit in a data processing system with rounding of floating point results.

<table>
<tr><td>(30) Priority: <b>23.04.81 US 256726<br>23.04.81 US 256923<br>23.04.81 US 256772</b></td><td>(73) Proprietor: <b>DATA GENERAL CORPORATION<br>Route 9<br>Westboro Massachusetts 01581 (US)</b></td></tr>
<tr><td>(43) Date of publication of application:<br><b>17.11.82 Bulletin 82/46</b></td><td rowspan="2">(72) Inventor: <b>Rosen, Josh<br>9A Lincoln Street<br>Westboro Massachusetts 01581 (US)</b><br>Inventor: <b>Blau, Jonathan S.<br>11 Woodbine Road, Apt.5<br>Natick Massachusetts 01760 (US)</b></td></tr>
<tr><td>(45) Publication of the grant of the patent:<br><b>22.06.88 Bulletin 88/25</b></td></tr>
<tr><td>(84) Designated Contracting States:<br><b>AT BE CH DE FR GB IT LI LU NL SE</b></td><td>(74) Representative: <b>Pears, David Ashley et al<br>REDDIE & GROSE 16 Theobalds Road<br>London WC1X 8PL (GB)</b></td></tr>
<tr><td>(56) References cited:<br><b>US-A-3 699 326<br>US-A-3 842 250<br>US-A-4 282 581<br>US-A-4 295 203</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 064 826

**Description**

This invention relates generally to data processing systems which utilize floating-point arithmetic units and more particularly, to an improved technique for "rounding" floating point calculations.

The representation of numbers in data processing sytems, particularly non-integer numbers, requires the introduction of a radix point into the rotation. For example, data processing systems may employ "fixed point notation" wherein the radix point is placed immediately to the right of the least significant bit or placed immediately to the right of the sign bit before the first information bit.

A further option is often referred to as "floating point notation" in which the numbers are represented by a sign, an exponent, and a mantissa. Such technique is described in many texts, one example being "Computer Architecture", Caxton C Foster, Van Nostrand Reinhold Co, New York 1976, pages 16 et seq.

Calculations upon the mantissa may be performed by operating on groups of bits (i.e. "bit slices") of the mantissa words involved, the computation for each bit slice producing a "carry" bit to be added to the adjacent bit slice until the calculation is completed for the entire word. For example, overall mantissa words having 32 bits may use eight 4-bit slice logic units in such calculations.

If each bit slice is permitted to produce its "carry" bit only after the operation for such bit slice has occured and the carry bit is then added to the next bit slice, the overall calculation time is considerably longer than desired. In order to reduce the overall calculation time, techniques for effectively computing the carry bits ahead of time, i.e. so-called "look ahead" carry bit techniques have been devised wherein the various carry bits are computed in parallel and simultaneously with the bit slice computation operations. Such techniques have been used for many years and are well known to those in the art.

After the overall computation has been completed, a "round" bit is then computed and added to the last bit slice as discussed below, the round bit being determined by a plurality of bits, often referred to as "guard" bits, which form a particular coded word which must be suitably decoded to produce the round bit. The round bit is usually calculated by parallel-acting logic following the overall computation and then added to the least significant bit of the unrounded floating point result at the appropriate carry bit location, an operation which can be thought of as an effective multiplexing operation, i.e. the round bit being inserted during the rounding cycle instead of the associated carry bit. For example, when using 32-bit words, the unrounded floating point result comprises 32 bits and is then rounded to a final result having 24 bits. In such cases, the unbiased rounding algorithm uses the eight bits of least significance to determine how to round the final 24-bit result. However, the insertion of the round bit to the completed floating point computation result by effective multiplexing techniques adds additional time to all of the calculations required for the mantissa calculations It is desirable to devise techniques to save this time.

It is already known (US 3 842 250) to avoid a rounding delay in the case of an adder/subtractor producing a scaled sum such as $\frac{1}{2}(A\pm B)$. Parallel-acting logic is used to determine the carry-in bit in such a way that the scaled result is correctly rounded in most cases but not all cases. The object is to restrict the number of adder stages to the number of result bits. The present invention is, in contrast, applicable to the more demanding case where a substantial number of guard bits are used, e.g. 8 guard bits, to ensure that results are not put in error by cumulative rounding effects, and where the result must always (not nearly always) be correctly rounded in accordance with the generated guard bits.

The invention thus relates, on the one hand, to a data processing system as set forth in the introductory part of claim 1 and which is, in accordance with the invention, characterised in that the rounding bit generated by the logic circuit is applied to one of the carry look-ahead units so as also to be added in substantially simultaneously to the carry input of the least significant of the first modules.

On the other hand, the invention relates to a method for performing unbiased rounding as set forth in the introductory part of claim 6 and which is, in accordance with the invention, characterised in that the round bit determined by the parallel-acting logic is inserted directly as a carry bit at the least significant bit of the first portion of the unrounded floating point result to produce the rounded floating point result. Preferably a portion of an existing "look ahead" stage (i.e. that stage normally used to generate the carry bit which is to be added to the least significant bit slice of the unrounded floating point result) is used for the round bit calculation, the round bit then being added as the carry bit in the least significant bit of the unrounding floating point result in parallel with all the other carry bits calculated by the remaining parallel look ahead stages.

The invention will be described in more detail, by way of example, with reference to the accompanying drawings, in which:

Fig 1 shows a block diagram of an arithmetic unit for performing arithmetic calculations;

Figs 2 to 2D show specific 4-bit microprocessor slice logic units used in mantissa calculations;

Fig 3 shows specific look-ahead logic units for computing the carry bits for mantissa calculations; and

Fig 4 shows specific logic units for use in computing the round bit for mantissa calculations in accordance with the invention.

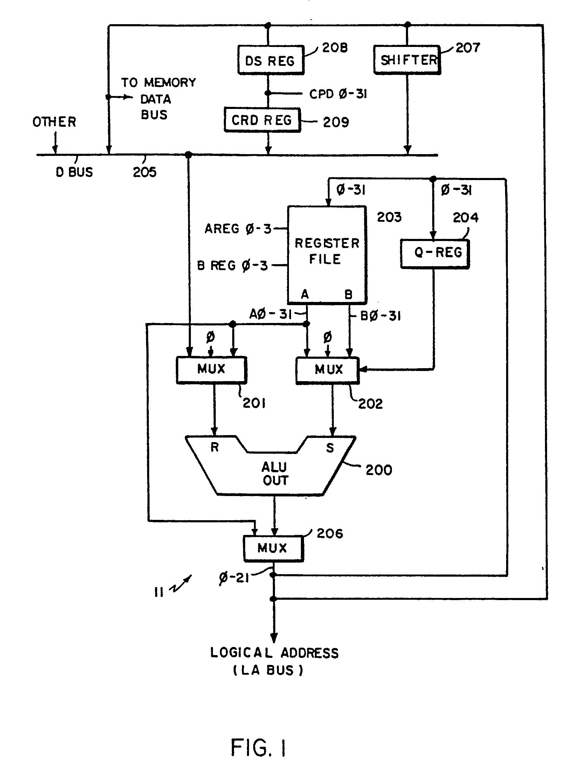

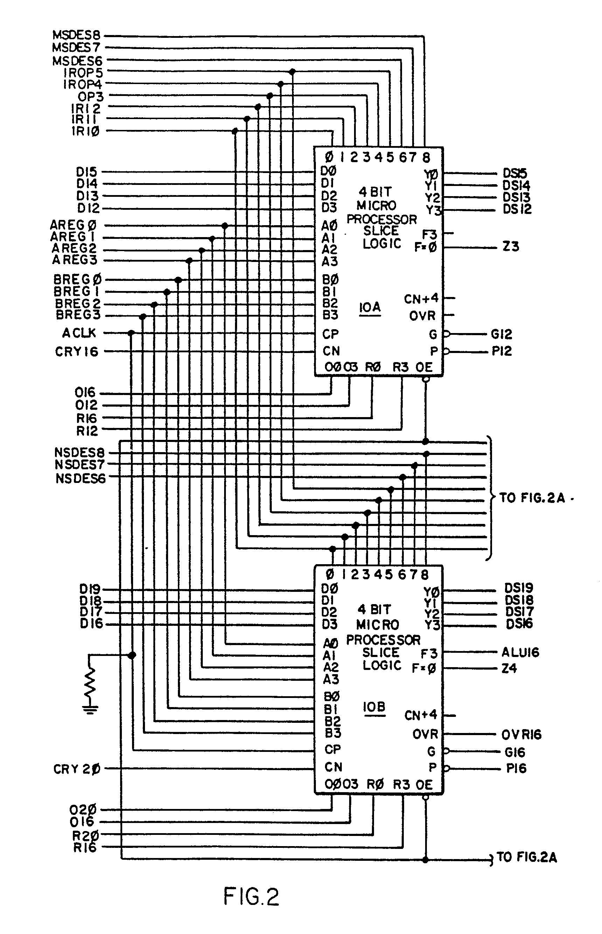

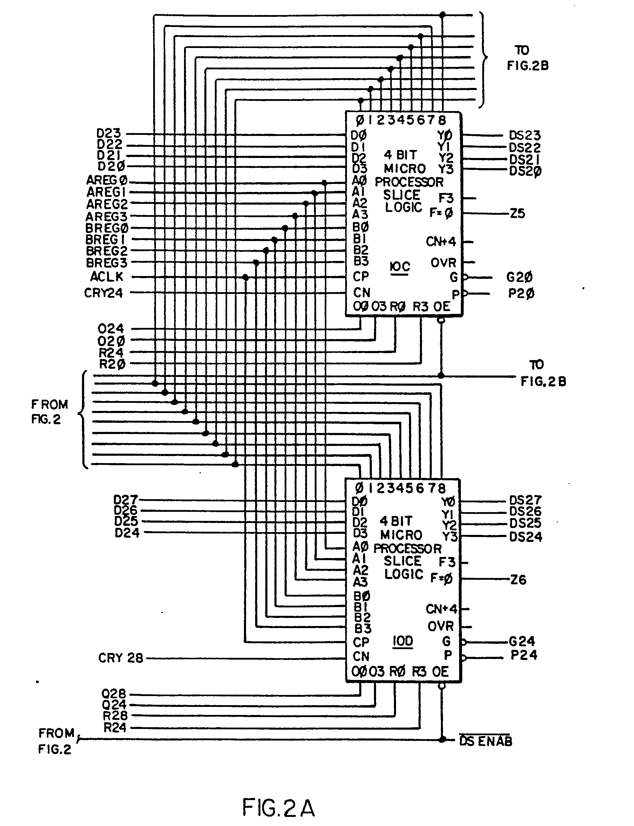

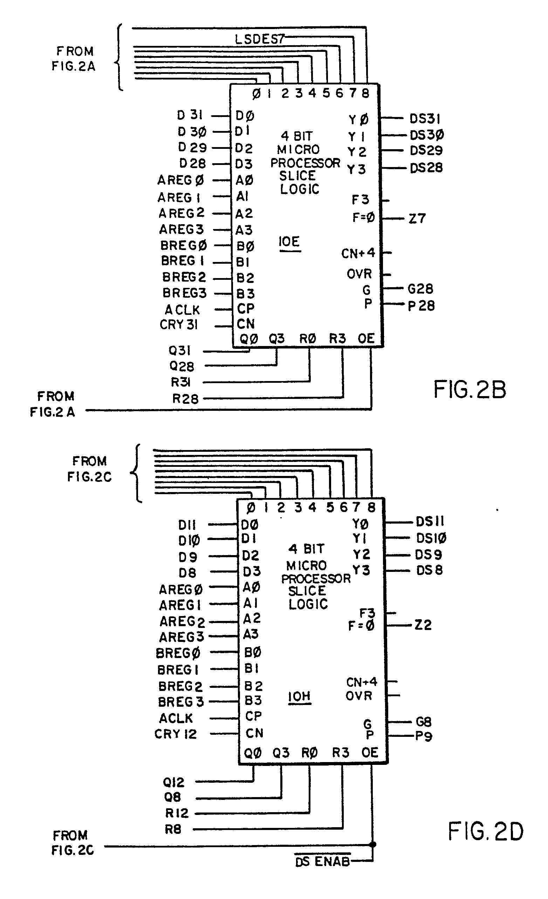

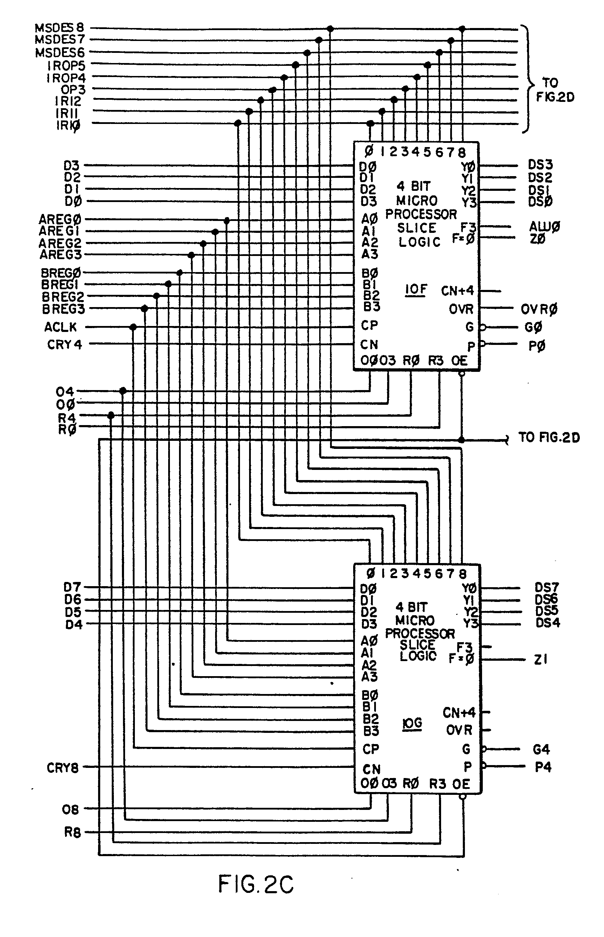

The invention disclosed herein can be best described in the context of a particular data processing system, such as that disclosed in EP 0 039 227. A broad block diagram of the arithmetic logic unit (ALU) used therein is shown in Fig 154 of the application which is reproduced herein in Fig 1. Specific logic diagrams required to understand the invention described herein are shown here in Figs 2—4. In such system, as is conventional for 32-bit mantissa calculations, the computation is made in four-bit slices as

2

shown by the eight microprocessor four-bit slice logic unit 10A—10H. Two 4-bit values are operated on, and a 1-bit carry value is added to the result of this operation to produce the 4-bit output (DS-outputs). Thus the slice units produce an unrounded floating point result formed as the following 4-bit slices shown below:

```
 CRY0    CRY4    CRY8    CRY12   CRY16   CRY20   CRY24   CRY28   CYR31

  0    3  4   7 8   11 12  15 16  19 20  23 24  27 28  31
```

UNROUNDED FLOATING POINT RESULT          GUARD BITS

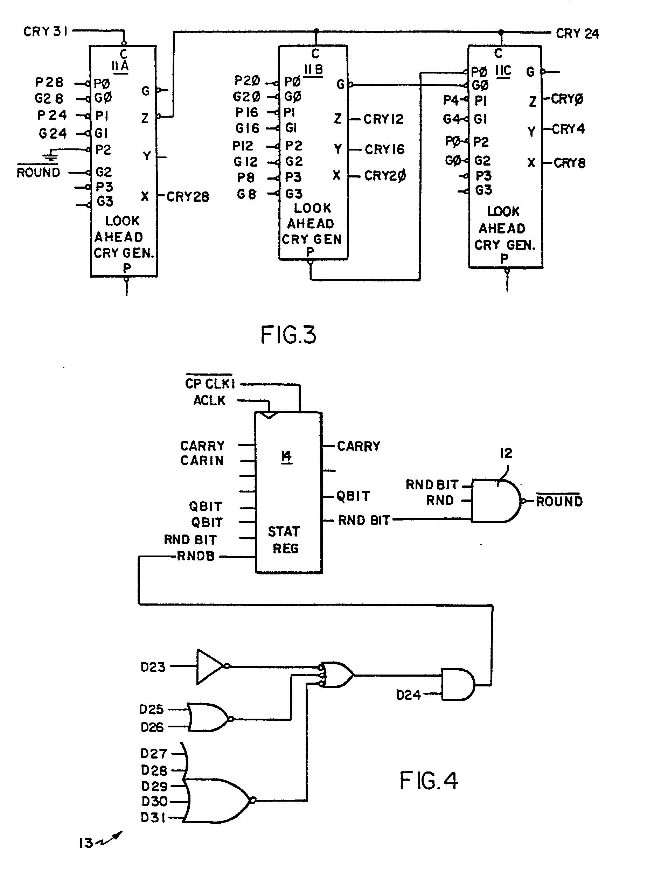

As can be seen in the above diagram, in the 32-bit calculated word the 24 bits forming the six more significant 4-bit slices (bits 0—23) produce the unrounded floating point result, while the eight bits forming the two less significant 4-bit groups (bit 24—31) represent the bits which are used to determine the "round" bit, referred to as the "guard" bits. In each instance, each of the 4-bit slices effectively produces a carry (CRY) bit which is supplied to the next adjacent 4-bit slice, e.g. bit slice 0—3 is effectively supplied with the carry bit CRY4 from the 4-bit slice 4—7, the latter slice is supplied with CRY8 from 4-bit slice 8—11, and so on. The CRY 31 bit is supplied from microcode, while the CRY0 bit is the carry bit for the final overall floating point result. In order to save time in the computation the carry bits are actually generated in parallel with the 4-bit computations in each of the 4-bit microprocessor slice logic unit, the parallel carry bit calculations being performed in the look ahead carry generator units 11A, 11B and 11C as shown in Fig. 3. Thus, during such arithmetic operation cycle, the overall computation, is performed substantially simultaneously to form the unrounded 32-bit result.

In conventional floating point computation techniques the round bit is then added during the next cycle (the round cycle) of the floating point computation, after the arithmetic operation has been completed, by appropriately decoding the guard bits to generate the round bit and then adding the round bit to bit 23 (effectively as CRY24 bit), which latter process can be achieved by using effective multiplexing techniques, for example. A certain amount of time is required for performing the multiplexing operation, and such time increases the overall data processing time for all operations. It is desirable to avoid such added processing time by reducing the time needed to generate and insert the round bit, as described below, in accordance with the invention.

The logic circuitry of the invention utilizes an additional section of look ahead generator stage 11A and associated circuitry 12, 13 and 14 for generating the round bit and for adding the round bit (as an effective CRY24 bit) in parallel with the generation and insertion of the other carry bits. Thus, the guard bits (D24—31) are supplied to appropriate gating logic 13, shown in Fig 4 to produce the RNDB bit. Such bit is then utilized in the round enable logic 12 and 14, shown in Fig 4 which produce the ROUND bit, the latter being supplied to the CRY24 look ahead generator 11A, and thence, to the specific 4-bit slice unit 10C which produces the least significant four bits (bits 20—30) of the (24-bit) floating point result as the final step in the arithmetic operation. Thus, the rounding of the floating point result is accomplished without adding a time interval required for the effective multiplexing of the round bit into CRY24 as required when using conventional techniques.

**Claims**

1. A data processing system comprising an arithmetic logic unit (200) for performing floating point arithmetic with unbiased rounding of the mantissa result, the said unit comprising a plurality of bit-slice modules (10A—10H) consisting of first modules (10F, 10G, 10H, 10A, 10B, 10C) for producing the result, and further modules (10D, 10E) operating on a plurality of guard bits, a logic circuit (12, 13, 14) responsive to the guard bits to produce a rounding bit (ROUND) used to effect the rounding, and carry look-ahead units (11A, 11B, 11C) responsive to bits (P, G) provided by the bit-slice modules to provide carry bits (CRY) to the modules so that the modules produce addition results substantially simultaneously, each including the carry bit from the preceding module, characterised in that the rounding bit (ROUND) generated by the logic circuit (12, 13, 14) is applied to one of the carry look-ahead units (11A) so as also to be added in substantially simultaneously to the carry intput (CRY24) of the least significant of the first modules (10C).

2. A data processing system in accordance with claim 1, characterised in that the said logic (12, 13, 14) includes means (13) responsive to the guard bits for producing a decoded bit (RNDB); and enable logic means (14, 12) responsive to the decoded bit for producing the roung bit (ROUND).

3. A data processing system in accordance with claim 1 or 2, characterised in that the unrounded floating point result comprises thirty-two bits, designated at bits 0—31, including twenty-four bits, designated as bits 0—23, used to form the rounded floating point result and eight guard bits, designated as bits 24—31, used to determine the round bit (ROUND).

4. A data processing system in accordance with claim 3, characterised in that each bit slice module (10A—10H) is a four-bit module.

5. A data processing system in accordance with claim 4, characterised in that the carry bits are formed as carry bits CRY4, CRY8, CRY12, CRY16, CRY20, CRY24 and CRY28 for insertion into bits 3, 7, 11, 15, 19, 23 and 27, respectively, of the unrounded floating point result, the round bit ($\overline{ROUND}$) being inserted as CRY24 into bit 23 to form said rounded floating point result.

6. A method for performing unbiased rounding of a floating point arithmetic result, comprising the steps of computing an unrounded floating point mantissa sum (bits 0—31), a first portion (bits 0—23) of which is used to form a rounded floating point result and a second portion (bits 24—31) of which comprises a plurality of guard bits used by parallel-acting logic (12, 13, 14) to determine a round bit ($\overline{ROUND}$) for use in the rounded floating point result; characterised in that the round bit determined by the parallel-acting logic (12, 13, 14) is inserted directly as a carry bit (CRY24) at the least significant bit (bit 23) of the first portion of the unrounded floating point result to produce the rounded floating point result.

7. A method in accordance with claim 6, further characterised by computing a plurality of carry bits (CRY0, 4, 8, 12, 16, 20, 24, 28) substantially simultaneously with the computation of the unrounded floating point result for insertion as selected bits thereof, the insertion of the round bit ($\overline{ROUND}$) being performed substantially simultaneously with the insertion of the plurality of carry bits.

8. A method in accordance with claim 6 or 7, characterised in that the unrounded floating point result has thirty two bits, designated as bits 0—31, the first portion thereof having twenty four bits, designated as bits 0—23, and the second portion thereof having eight bits, designated as 24—31, the round bits being inserted at bit 23 of the first portion to form the rounded floating pointed result.

**Patentansprüche**

1. Datenverarbeitungsanlage mit einer arithmetisch-logischen Einheit (200) zur Durchführung von Gleitkommaarithmetik mit systemfehlerfreier (unbiased) Rundung des Mantissenergebnisses, wobei die arithmetisch logische Einheit eine Vielzahl von Bit-Slice-Modulen (10A—10H) mit ersten Modulen (10F, 10G, 10H, 10A, 10A, 10B, 10C) zur Erzeugung des Ergebnisses und mit weiteren Modulen (10D, 10E) zur Bearbeitung einer Vielzahl von Zusatz-(Guard-)Bits, einen logischen, auf die Zusatzbits entsprechenden Schaltkreis (12, 13, 14) zur Erzeugung eines zum Durchführen der Rundung verwendeten Rundungsbits (ROUND) und parallele Übertragungslogiken (Carry look-ahead units 11A, 11B, 11C) enthält, die auf von den Bit-Slice-Modulen erzeugte Bits (P, G) ansprechen und Übertragungsbits (Carry CRY) den Modulen derart zuführen, daß diese im wesentlichen gleichzeitig Additionsergebnisse liefern, die jeweils das Übertragsbit vom vorhergehenden Modul enthalten, dadurch gekennzeichnet, daß das vom logischen Schaltkreis (12, 13, 14) erzeugte Rundungsbit ($\overline{ROUND}$) einer der parallélen Übertraglogiken (11A) zugeführt wird, um es auch im wesentlichen gleichzeitig dem Übertragseingang (CRY24) des geringstwertigen ersten Moduls (10) zuzuführen.

2. Datenverarbeitungsanlage nach Anspruch 1, dadurch gekennzeichnet, daß der logische Schaltkreis (12, 13, 14) auf die Zusatzstellen ansprechende Mittel (13) zur Erzeugung eines decodierten Bits (RNBDB) und auf das decodierte Bit ansprechende logische Aktivierungsmittel (14, 12) zur Erzeugung des Rundungsbits ($\overline{ROUND}$) enthält.

3. Datenverarbeitungsanlage nach Anspruch 1 oder 2, dadurch gekennzeichnet, daß das ungerundete Gleitkommaergebnis (32) zweiunddreißig mit 0—31 bezeichnete Bits enthält, die vierundzwanzig mit 0—23 bezeichnete und zur Bildung des gerundeten Gleitkommaergebnisses verwendete Bits und acht mit 24—31 bezeichnete, zur Bestimmung des Rundungsbits ($\overline{ROUND}$) verwendete Zusatzbits enthält.

4. Datenverarbeitungsanlage nach Anspruch 3, dadurch gekennzeichnet, daß jeder Bit-Slice-Modul (10A—10H) ein Vier-Bit-Modul ist.

5. Datenverarbeitungsanlage nach Anspruch 4, dadurch gekennzeichnet, daß die Übertragsbits CRY4, CRY8, CRY12, CRY16, CRY20, CRY24 und CRY28 ausgebildet und zum Einfügen in die Bits 3, 7, 11, 15, 19, 23 bzw. 27 des ungerundeten Gleitkommaergebnisses bestimmt sind, wobei das Rundungsbit ($\overline{ROUND}$) als Bit CRY24 zur Bildung des gerundeten Gleitkommaergebnisses in das Bit 23 eingefügt wird.

6. Verfahren zur systemfehlerfreien (unbiased) Rundung eines arithmetischen Gleitkommaergebnisses, enthaltend den Schritt der Berechnung einer ungerundeten Gleitkommamantissensumme (Bits 0—31), von der ein erster Teil (Bits 0—23) zur Bildung eines gerundeten Gleitkommaergebnisses verwendet wird und von dem ein zweiter Teil (Bits 24—31) eine Vielzahl von Zusatz-(Guard-)Bits enthält, die durch eine parallel wirkende Logik (12, 13, 14) zur Bestimmung eines zur Anwendung im gerundeten Gleitkommaergebnis bestimmten Rundungsbits ($\overline{ROUND}$) verwendet werden, dadurch gekennzeichnet, daß das durch die parallel wirkende Logik (12, 13, 14) bestimmte Rundungsbit direkt als Übertragsbit (CRY24) beim geringstwertigen Bit (Bit 23) des ersten Teils des ungerundeten Gleitkommaergebnisses eingefügt wird, um das gerundete Gleitkommaergebnis zu erzeugen.

7. Verfahren nach Anspruch 6, dadurch gekennzeichnet, daß eine Vielzahl von Übertragsbits (CRYO, 4, 8, 12, 16, 20, 24, 28) im wesentlichen gleichzeitig mit der Berechnung des ungerundeten Gleitkommaergebnisses berechnet wird, um bei ausgewählten Bits desselben eingefügt zu werden, wobei die Einfügung des Rundungsbits ($\overline{ROUND}$) im wesentlichen gleichzeitig mit der Einfügung der Vielzahl der Übertragsbits erfolgt.

8. Verfahren nach Anspruch 6 oder 7, dadurch gekennzeichnet, daß das ungerundete Gleitkommaergebnis zweiunddreißig mit 0—31 bezeichnete Bits aufweist, von denen der erste Teil vierundzwanzig mit 0—23 bezeichnete Bits und der zweite Teil acht mit 24—31 bezeichnete Bits umfaßt, wobei die Rundungsbits beim Bit 23 des ersten Teils eingefügt werden, um das gerundete Gleitkommaergebnis zu bilden.

**Revendications**

1. Un système de traitement des données comprenant une unité arithmétique et logique (200) pour exécuter des opérations arithmétiques en virgule flottante avec un arrondi non altéré du résultat de la mantisse, cette unité comprenant une pluralité de modules de tranche de bits (10A, 10H) consistant en premiers modules (10F, 10G, 10H, 10A, 10B et 10C) pour produire le résultat, et en autres modules (10D, 10E) traitant une pluralité de bits de garde, un circuit logique (12, 13, 14) fonctionnant en réponse aux bits de garde de manière à produire un bit d'arrondi (ROUND/) utilisé pour effectuer l'arrondi, et des unités de prédiction de report (11A, 11B, 11C), fonctionnant en réponse à des bits (P, G) fournis par les modules de tranche de bits de manière à produire des bits de report (CRY) pour les modules de sorte que ces modules produisent, de façon pratiquement simultanée, des résultats d'addition dont chacun comprend le bit de report du module précédent, caractérisé en ce que le bit d'arrondi (ROUND/) produit par le circuit logique (12, 13, 14) est appliqué à l'une des unités de prédiction de report (11A) de manière à pouvoir également l'ajouter pratiquement en même temps à l'entrée de report (CRY24) de celui (10C) des premiers modules de poids le plus faible.

2. Le système de traitement des données de la revendication 1, caractérisé en ce que ladite logique (12, 13, 14) comprend des moyens (13), fonctionnant en réponse aux bits de garde, pour produire un bit décodé (RNDB), ainsi que des moyens d'autorisation de logique (14, 12) fonctionnant en réponse au bit décodé pour produire le bit d'arrondi (ROUND/).

3. Le système de traitement des données de la revendication 1 ou 2, caractérisé en ce que le résultat non arrondi en virgule flottante comprend trente-deux bits, affectés aux bits 0 à 31 et comprenant vingt-quatre bits, affectés aux bits 0 à 23, utilisés pour former le résultat arrondi en virgule flottante et huit bits de garde, affectés aux bits 24 à 31, utilisés pour déterminer le bit d'arrondi (ROUND/).

4. Le système de traitement des données de la revendication 3, caractérisé en ce que chaque module de tranche de bits (10A—10H) est un module à quatre bits. ·

5. Un système de traitement des données selon la revendication 4, caractérisé en ce que les bits de report sont formés par les bits de report CRY4, CRY8, CRY12, CRY16, CRY20, CRY24 and CRY28 pour insertion, respectivement dans les bits 3, 7, 11, 15, 19, 23 et 27, du résultat non arrondi en virgule flottante, le bit d'arrondi (ROUND/) étant inséré comme CRY24 dans le bit 23 pour former ledit résultat arrondi en virgule flottante.

6. Un procédé pour obtenir un arrondi non altéré d'un résultat arithmétique en virgule flottante, comprenant les étapes de calcul d'une somme de mantisses non arrondie en virgule flottante (bits 0 à 31), dont une première partie (bits 0 à 23) est utilisée pour former un résultat arrondi en virgule flottante et dont une seconde partie (bits 24 à 31) comprend une pluralité de bits de garde utilisés par une logique à fonctionnement parallèle (12, 13, 14) pour déterminer un bit d'arrondi (ROUND/) utilisé dans le résultat arrondi en virgule flottante, caractérisé en ce que le bit d'arrondi déterminé par la logique à fonctionnement parallèle (12, 13, 14) est inséré directement sous forme d'un bit de report (CRY 24) au bit de poids le plus faible (bit 23) de la première partie du résultat non arrondi en virgule flottante, afin de produire le résultat arrondi en virgule flottante.

7. Le procédé de la revendication 6, caractérisé en outre par le calcul d'une pluralité de bits de report (CRY0, 4, 8, 12, 16, 20, 24, 28) de façon pratiquement simultanée avec le calcul du résultat non arrondi en virgule flottante pour insertion à des bits sélectionnés de celui-ci l'insertion du bit d'arrondi (ROUND/) étant exécutée de façon pratiquement simultanée avec l'insertion de la pluralité de bits de report.

8. Le procédé de l'une des revendications 6 ou 7, caractérisé en ce que le résultat non arrondi en virgule flottante possède trente-deux bits affectés aux bits 0 à 31, la première partie de ceux-ci ayant vingt-quatre bits affectés aux bits 0 à 23, et la seconde partie de ceux-ci ayant huit bits affectés aux bits 24 à 31, les bits d'arrondi étant insérées au bit 23 de la première partie pour former le résultat arrondi en virgule flottante.

FIG. I

FIG.2

FIG.2A

FROM
FIG.2A

LSDES7

Ø 1 2 3 4 5 6 7 8

D 31 — DØ — YØ — DS31
D 3Ø — DI — Y I — DS3Ø
D 29 — D2 — Y 2 — DS29
D 28 — D3 — Y 3 — DS28
AREG Ø — AØ — 4 BIT MICRO PROCESSOR SLICE LOGIC
AREG I — AI
AREG 2 — A2
AREG3 — A3 — F3
BREGØ — BØ — F=Ø — Z7
BREG I — BI — IOE
BREG2 — B2 — CN+4
BREG3 — B3 — OVR
ACLK — CP — G — G28
CRY 31 — CN — P — P28

QØ Q3 RØ R3 OE

Q31
Q28
R3I
R28

FROM
FIG.2 A

FIG.2B

FROM
FIG.2C

Ø 1 2 3 4 5 6 7 8

DII — DØ — YØ — DSII
DIØ — DI — YI — DSIØ
D 9 — D2 — 4 BIT MICRO PROCESSOR SLICE LOGIC — Y2 — DS 9
D 8 — D3 — Y3 — DS 8
AREGØ — AØ
AREGI — AI
AREG2 — A2 — F3
AREG3 — A3 — F=Ø — Z2
BREGØ — BØ
BREG I — BI
BREG2 — B2 — CN+4
BREG3 — B3 — IOH — OVR
ACLK — CP — G — G8
CRY I2 — CN — P — P9

QØ Q3 RØ R3 OE

QI2
Q8
RI2
R8

FROM
FIG.2C

DS ENAB

FIG.2D

FIG.2C

5

FIG.3

FIG.4